# EUROPEAN PATENT SPECIFICATION

(11) **EP 2 740 287 B1**
(45) Date of publication and mention of the grant of the patent: **12.04.2017**
(21) Application number: 12733501.6
(22) Date of filing: 10.07.2012
(51) Int. Cl.: H04W 16/26

(54) **ENHANCED RANK FOR OUTDOOR TO INDOOR COVERAGE**
VERBESSERTE REIHUNG FÜR AUSSEN- UND INNENREICHWEITE
RANG AMÉLIORÉ POUR COUVERTURE EXTÉRIEUR-INTÉRIEUR

(30) Priority: 04.08.2011 WO PCT/EP2011/063472
(43) Date of publication of application: 11.06.2014
(73) Proprietor: Telefonaktiebolaget LM Ericsson (publ), 164 83 Stockholm (SE)
(72) Inventor: NILSSON, Andreas, S-412 59 Göteborg (SE); ASPLUND, Henrik, S-117 34 Stockholm (SE); COLDREY, Mikael, S-438 36 Landvetter (SE)
(74) Representative: Ericsson
(86) International application number: PCT/EP2012/063514
(87) International publication number: WO 2013/017380

(56) References cited:
- WO-A1-2009/015101
- US-A1- 2009 061 939
- US-A1- 2009 175 214
- BONG YOUL CHO ET AL: "Practical scheme to enable MIMO communications in distributed antenna systems for efficient indoor coverage", COMMUNICATIONS AND INFORMATION TECHNOLOGY, 2009. ISCIT 2009. 9TH INTERNATIONAL SYMPOSIUM ON, IEEE, PISCATAWAY, NJ, USA, 28 September 2009 (2009-09-28), pages 25-28, XP031571371, ISBN: 978-1-4244-4521-9
- MOUHAMADOU M ET AL: "Multi-band diversity antenna performances evaluation for multi-standard compact wireless terminal", 3RD EUROPEAN CONFERENCE ON ANTENNAS AND PROPAGATION. EUCAP 2009 , 23-27 MARCH 2009 - BERLIN, GERMANY, IEEE, PISCATAWAY, NJ, USA, 23 March 2009 (2009-03-23), pages 1603-1607, XP031470094, ISBN: 978-1-4244-4753-4
- MIKAEL COLDREY ET AL: "Higher Order MIMO Outdoor-to-Indoor Measurements Using Repeaters", 2010 IEEE VEHICULAR TECHNOLOGY CONFERENCE (VTC 2010-SPRING) - 16-19 MAY 2010 - TAIPEI, TAIWAN, IEEE, US, 16 May 2010 (2010-05-16), pages 1-5, XP031696336, ISBN: 978-1-4244-2518-1

## Description

### TECHNICAL FIELD

The present invention relates to the field of wireless communication systems and, in particularly, to outdoor-indoor multiple-input multiple-output (MIMO) communication systems utilizing distributed antenna systems (DAS) for communicating with user equipment located inside a physical structure such as a building.

### BACKGROUND

A large part of today's traffic load in wireless communication comes from users inside physical structures such as office buildings, shopping malls, cafés and restaurants, etc. Providing these indoor users with good coverage, high bit-rate and spectrally efficient communication from outside base stations is very challenging due to, for example, the penetration loss that occurs when the communication signals propagates through the walls of the building.

A well-known solution for enhancing communication signals inside a building is to use outdoor-indoor repeaters. An outdoor-indoor repeater has a pick-up antenna placed on the outside of the building connected via a double-directional power amplifier to a donor antenna placed on the inside of the building. Thus, signals from the base station are received by the pick-up antenna on the outside of the building, where the signal level is high, and then the signals are re-radiated inside the building by the donor antenna, and thereby circumventing the penetration loss. In a similar manner, communication signals from user equipment (UE), such as mobile phones and portable computer equipment, inside the building are received by the donor antenna located inside the building, and re-radiated by the pick-up antenna on the outside of the building. Typically, the pick-up antenna of the repeater on the outside of the building is placed in line of sight (LOS) of the base station antenna to ensure good link quality.

A well-known way of improving spectral efficiency in a wireless communications system is to utilize a multiple-input multiple-output (MIMO) communication system. Provided that both transmitter and receiver uses more than one antenna (e.g. *K* transmit antennas and *M* receive antennas), and that the channels between different pairs of transmit and receive antennas have similar power and can be made orthogonal, gains in spectral efficiency on the order of *min(M,K)* are possible to achieve. To allow indoor users communicating via a repeater to fully benefit from MIMO gains there needs to be at least as many repeater antennas as there are antennas at the base station.

Outdoor-indoor MIMO repeaters ensure good indoor coverage which implies high signal strengths. However the indoor coverage is typically limited to the close vicinity of the repeater donor antennas which usually are co-located with the repeater itself. Furthermore, as mentioned above, there is usually LOS between the base station and the repeater pick-up antennas in order to ensure a good link quality for the desired communication signals, and it is well known in the art that it is hard to achieve MIMO channels of more than rank two in a LOS environment since the spatially separated antennas will experience high correlation. Achieving sufficiently low correlation in a LOS environment might require a very large spatial separation of the repeaters antenna elements, which might make it difficult to co-locate the indoor donor antennas with the repeater and the pick-up antennas. Having non co-located donor antennas could lead to severe power imbalances between the donor antennas when for instance communicating with user equipment closer to one of the donor antennas, which in its turn will result in lower MIMO gains.

Thus, finding a way to offer good indoor coverage with high bit-rate and spectrally efficient communication is therefore highly sought for.

The problem of implementing an efficient indoor DAS using a single cable between a signal source such as a base station and indoor antenna units is discussed by Bong Youl Cho, Sung II Seo, and Jin Young Kim in "Practical scheme to enable MIMO communications in distributed antenna systems for efficient indoor coverage", Proc. 9th International Symposium on Communications and Information Technology, 2009, pp. 25-28.

Aspects relating to outdoor repeater architecture are known from US2009/175214 and Mouhammadou M et al: "Multi-band diversity antenna performances evaluation for multi-standard compact wireless terminal" 3rd European Conference on Antennas and Propagation, EUCAP 2009, 23-27 March 2009 - Berling, Germany, IEEE, Piscataway, NJ, USA, 23 March 2009 (2009-03-23), pages 1603-1607, XP031470094, ISBN: 978-1-4244-4753-4 paragraph [0001].

Aspects relating to indoor coverage are discussed in US 2009/0061939.

### SUMMARY OF THE INVENTION

With the above description in mind, then, an aspect of the present invention is to provide a wireless communications system which seeks to mitigate, alleviate, or eliminate one or more of the above-identified deficiencies in the art and disadvantages singly or in any combination.

The present invention relates to a wireless MIMO communications system according to claim 1 and to a method for providing wireless MIMO communication according to claim 5. Further embodiments are according to the dependent claims.

### BRIEF DESCRIPTION OF THE DRAWINGS

Further objects, features, and advantages of the present invention will appear from the following detailed description of some embodiments and variants of the invention, wherein some embodiments or variants of the invention will be described in more detail with reference to the accompanying drawings, in which:
Fig. 1 shows a block diagram of a wireless outdoor-indoor MIMO communications system, employing multiple MIMO repeaters and multiple DASs, for communicating with user equipment located inside a physical structure, according to an embodiment of the present invention; and
Fig. 2 shows a block diagram of a wireless outdoor-indoor MIMO communications system, employing multiple MIMO repeaters with dual-polarization and multiple DASs, for communicating with user equipment located inside a physical structure, according to an embodiment of the present invention; and
Fig. 3 shows a block diagram of a wireless outdoor-indoor MIMO communications system, employing one repeater with two antenna ports connected to two DASs, for communicating with user equipment located inside a physical structure, according to an embodiment of the present invention; and
Fig. 4 shows a flowchart describing one way of how the present invention may be employed; and
Fig. 5a-5c shows a collection of flowcharts describing different embodiments and variations of the present invention.

### DETAILED DESCRIPTION

Embodiments of the present invention will be described more fully hereinafter with reference to the accompanying drawings, in which embodiments of the invention are shown. This invention may, however, be embodied in many different forms and should not be construed as limited to the embodiments set forth herein. Rather, these embodiments are provided so that this disclosure will be thorough and complete, and will fully convey the scope of the invention to those skilled in the art. Like reference signs refer to like elements throughout the description.

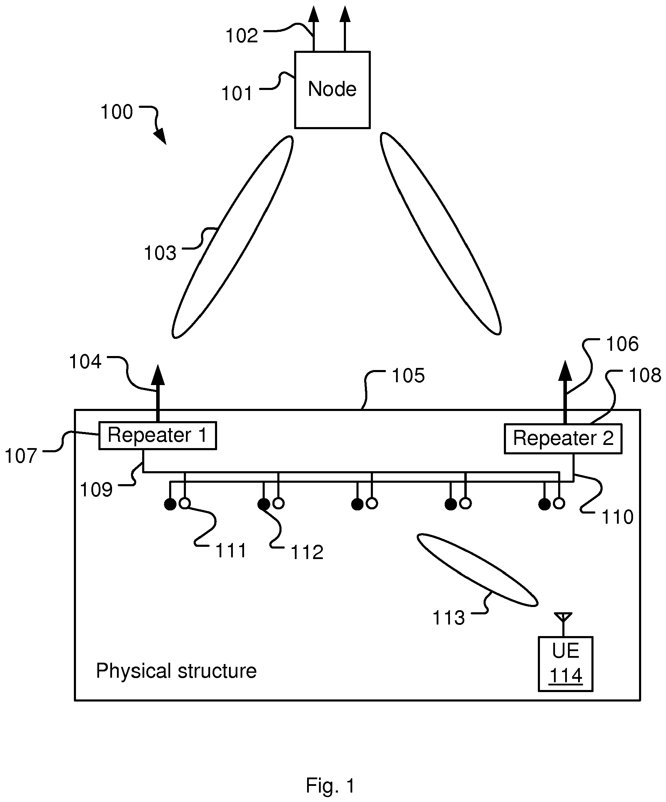

A way of offering good indoor coverage along with high bit-rate and spectrally efficient communication is to utilize a wireless outdoor-indoor MIMO communications system 100 according to an embodiment of the present invention. The wireless outdoor-indoor MIMO communications system 100, shown in figure 1, comprise of a node 101, and at least two node antennas 102, adapted for wireless MIMO communication. The term node will be used through out the description of the different embodiments and variants of the present invention, and should be interpreted as to include any type of wireless communication redistribution point, such as a base station, or endpoint, such as user equipment. The node 101 may further be configured for line-of-sight (LOS) MIMO communication over a first radio channel 103 with at least two outdoor-indoor repeaters 107,108.

The outdoor-indoor repeaters 107,108 in figure 1 may be adapted for LOS MIMO and/or for non-LOS MIMO communication over the first radio channel 103 with at least one node 101 having at least two node antennas 102. Each repeater 107,108 may have at least one repeater antenna 104,106 being adapted to receive and to transmit communication signals to and from said node 101 over the first radio channel 103. The outdoor-indoor repeaters 107,108 are usually placed in close proximity to the repeater antennas 104, 106 on the outer side or on the inner side of the physical structure 105 in which the repeaters are going to provide indoor coverage. Usually the repeater antennas 104, 106 are placed or mounted on the outer wall, the façade, of the physical structure 105 in close proximity to the repeaters, in order to minimize cable losses and for reducing installation costs, and typically in LOS of said node antennas 102 in order to maximize the signal strength of the communication signals transmitted between the antennas 102,104,106 over the first radio channel 103.

The physical structure 105 may be any type of man made structure such as a multi-storage building having several interior spaces (such as rooms, hallways, etc.) of different sizes and shapes, to a small house-like building containing only one interior space (one room). The term physical structure 105 should also be interpreted to include any man-made or any non man-made underground structure such as a mine, cave or the like.

The repeaters 107,108 may be mounted either on the outer walls or the inner walls (or both) of the physical structure 105. The repeaters 107,108 provide a connection via a double-directional power amplifier between the repeater antennas 104,106, mounted on the outside of the physical structure 105, and the donor antennas 109,110 mounted inside of the physical structure 105.

In the embodiment of the present invention the at least two outdoor-indoor repeaters 107,108, adapted for LOS MIMO communication over a first radio channel 103 with said node 101 and having at least one repeater antenna each 104,106, are provided inside a physical structure 105. Preferably, the repeaters are spaced well-apart, usually ranging from several meters up to over 100 meters, and spaced such that the first radio channel 103 between the node 101 and the repeaters 107,108 support a rank that is equal to the number of repeater antennas 104, 106. The separation distance between the repeaters will of cause depend on parameters such as the size of the building, the possibility of having LOS to the node 101, etc. By spatially separating the repeaters and the repeater antennas well-apart, the correlation between them will drastically be reduce despite being implemented in a LOS environment, and thus making it possible to support a rank that is equal to the number of repeater antennas.

The donor antennas 109,110 may be implemented using any type of distributed antenna system. A distributed antenna system (DAS) 109,110 is typically a network of spatially separated antenna nodes 111,112 connected to a common source such as a repeater 107,108 which via a radio channel (in this case a second radio channel) provide wireless service within an interior space inside said physical structure 105.

The at least two repeaters 107,108 are implemented, according to the embodiment of the present invention, with at least one DAS 109,110 connected to each repeater 107,108, provided inside the physical structure 105, adapted for indoor MIMO communication over a second radio channel 113 with user equipment (UE) 114 located inside said physical structure 105. The DASs 109,110 are provided such that said second radio channel 113 between the repeaters 107,108 and user equipment 114 located inside said physical structure 105 support a rank that is equal to the number of repeater antennas 104,106. The UE 114 may be any type of equipment capable of communicating wirelessly such as mobile phones and computer equipment (i.e. laptops, tabletop computers, pads, etc.). The UE 114 may be stationary in said interior space in the physical structure 105 or it may be capable of moving (i.e. mobile) between different interior spaces inside the physical structure 105. The UE 114 may or may not be adapted for MIMO communication with the DASs 109,110 over the second radio channel 113. Each DASs 109,110 of each repeater 107,108 are provided such that they provide essentially the same unified indoor coverage of essentially the same interior space in said physical structure 105. The term "essentially" should be interpreted as meaning both "exactly the same" and "close to, but not exactly the same", since in reality it may be difficult to achieve exactly the same coverage of an interior space. By employing DASs covering essentially the same interior space the power imbalance in the MIMO channel that would occur in a traditional repeater setup with ordinary donor antennas are virtually avoided. Another benefit with using DASs is that they provides a more uniform coverage in the interior space that it is implemented to cover in comparison with a traditional point-source antenna from which the coverage falls with a factor 1/r² or faster.

The DAS antennas 109,110 could in a variant be adapted for using orthogonal polarizations. In the case that the DASs 109,110 experience additional longitudinal loss it is possible to compensate by using bi-directional power amplifiers at certain positions along the DASs.

The first radio channel 103 and the second radio channel 113 mentioned above may be different radio channels or it may be the same radio channel, depending on the set up of the system and choice of equipment.

By employing the system shown in figure 1 all objectives of the invention are fulfilled due to the fact that the first radio channel 103 is full rank, the second radio channel 113 is also full rank (due to the diversity from the two DASs), and the second radio channel 113 is power balanced due to the equal coverage from the two DAS antennas 109,110. It may be of importance in some scenarios that the power splitters and feeder losses are balanced between the two DASs such that the output power at each pair of antennas 111,112 is balanced across the two repeater 107,108 ports. Variants using active components such as power amplifiers or RF-opto converters in combination with a fibre optic distribution network can also be envisaged.

By employing the wireless outdoor-indoor MIMO communications system 100 as described above in conjunction with the description of figure 1, the object of the present invention will be fulfilled in that the communication system 100 provides indoor users with good coverage, high bit-rate and spectrally efficient communication from an outside base station. It is clear that with the presented communication system 100 a higher MIMO rank can be achieved compared to the traditional way of having repeaters with co-located pick-up antennas, as well as compared to repeaters with non-co-located donor antennas. The invention combines well-separated repeater antennas with DASs covering essentially the same interior space which together will, with a high probability, give excellent higher-order MIMO indoor coverage over a large area.

Another advantage of the present invention is that presented communication system 100 improves the channel rank for the case of multi-stream transmissions in combination with outdoor-indoor repeaters. This will increase the spatial multiplexing gains for indoor users in communication with an outdoor base station via such repeaters, and lead among other things to improved user bitrates. As the majority of high data rate-users currently are and are expected to be (also in the future) indoor users, such improvements are especially desirable. Thus, the object of the present invention is therefore fulfilled.

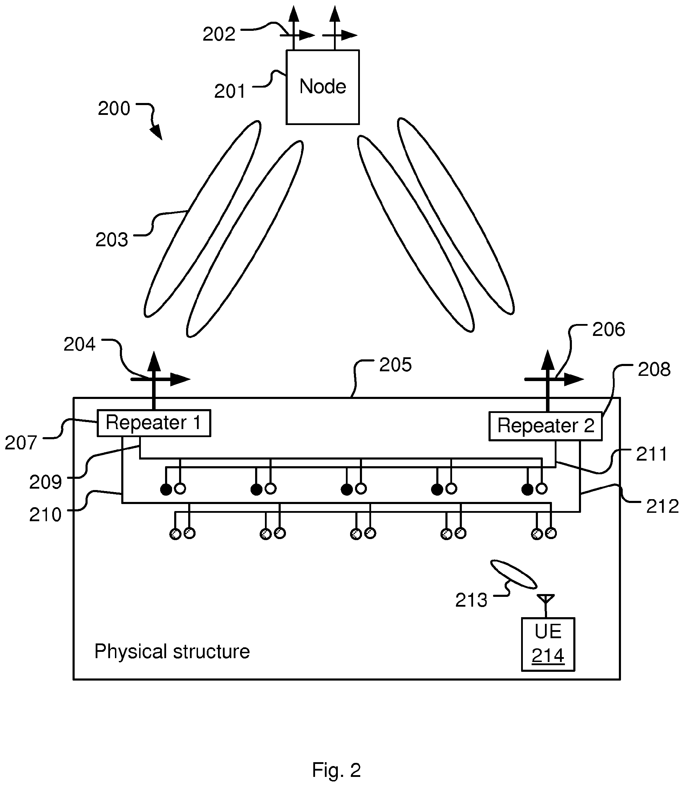

Figure 2 shows a variant of the embodiment presented in conjunction with figure 1. In the variant the wireless outdoor-indoor MIMO communications system 200 is comprised of a node 201 having two dual-polarized node antennas 202 adapted for wireless LOS MIMO communication with two repeaters 207,208 having dual-polarized repeater antennas 204,206 mounted well separated on a physical structure 205. Each repeater 207,208 is connected to two DASs, repeater 1 207 to DAS 209 and 210 and repeater 2 to DAS 211 and 212, wherein each pair of DASs either covering essentially the same interior space in the physical structure 205, or in a variant covering essentially the same interior space in the physical structure 205. The DASs 209,210,211,212 are configured to communicate with UE 214 inside said physical structure 205. The communication system 200 shown in figure 2 is not limited to using a node with only two dual-polarized node antennas and two repeaters employing one dual-polarized repeater antenna and two DASs each, but may be extended to employ several node antennas (dual-polarized or not) and several repeaters having multiple repeater antennas (dual-polarized or not) and DASs. The main benefit with employing dual polarized antennas and multiple DASs, is that the capacity of the communications system may in that way be extended from a 2-by-2 MIMO system to a 4-by-4 MIMO system.

The communication system 200 in figure 2 can also be realized using the communication system 100 setup in figure 1, but using two dual-polarized DASs.

The repeaters 107,108 in figure 1 do not necessarily have to be placed close to the repeater antennas 104,106. As long as the repeater antennas 104,106 are spaced well apart the repeaters could be placed anywhere. However, the closer the repeaters are to the pick-up antennas the better performance could typically be expected due to reduced cable loss.

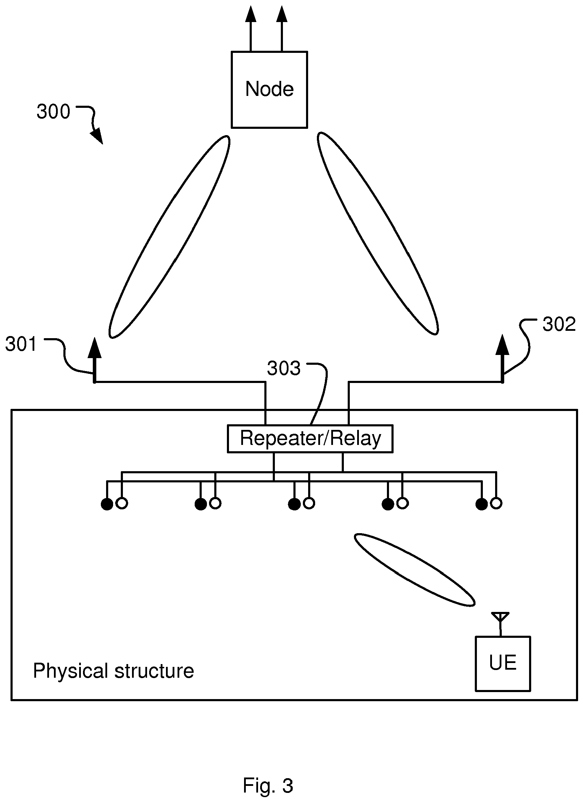

Figure 3 shows yet another variant of the embodiment described in conjunction with figure 1. In the communication system 300 shown in figure 3 only one repeater 303 having two antenna ports is used. The repeater antennas 301, 302 are spaced well apart but at a distance from the single repeater 303. The single repeater 303 may in this variant be exchanged to a relay. However, the functionality of the communication system 300 in figure 3 is the same as the functionality of the communication system 100 in figure 1.

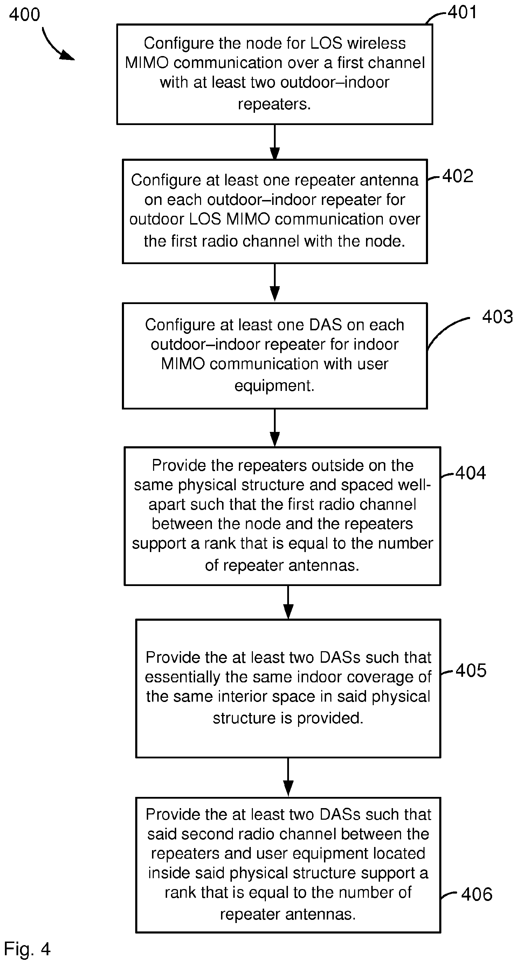

Figure 4 shows a flowchart describing the main steps in a method for providing LOS wireless MIMO communication 400 between a node, located outside a physical structure, and user equipment, located inside said physical structure. The method comprises the steps of;
I) configuring 401 said node for LOS wireless MIMO communication with at least two outdoor-indoor repeaters provided outside said physical structure;
II) configuring 402 at least one repeater antenna on each said outdoor-indoor repeater, located outside said physical structure, for outdoor LOS MIMO communication with said node; and
III) configuring 403 at least one DAS coupled to each said outdoor-indoor repeater, located inside said physical structure, for indoor MIMO communication with said user equipment located inside said physical structure; and
IV) providing 404 the repeaters outside on the same physical structure and spaced well-apart such that the first radio channel between the node and the repeaters support a rank that is equal to the number of repeater antennas; and
V) providing 405 the at least two DASs such that they essentially have the same indoor coverage of the same interior space in said physical structure is provided; and
VI) providing 406 the at least two DASs such that said second radio channel between the repeaters and user equipment located inside said physical structure support a rank that is equal to the number of repeater antennas.

As described in the above embodiments of the present invention it is important that the repeaters are provided on the same physical structure but spaced well-apart (such that the first radio channel between the node and the repeaters support a rank that is equal to the number of repeater antennas), if possible spacing them several meters apart, and that each DAS of each repeater is provided such that the second radio channel between the repeaters and user equipment located inside said physical structure support a rank that is equal to the number of repeater antennas and such that they provide essentially the same indoor coverage of essentially the same interior space in said physical structure. An example of this could for instance be to run one DAS along one wall in a corridor and run the other DAS on the opposite wall in the corridor. Another way would be to run both DASs close to the ceiling but spaced apart.

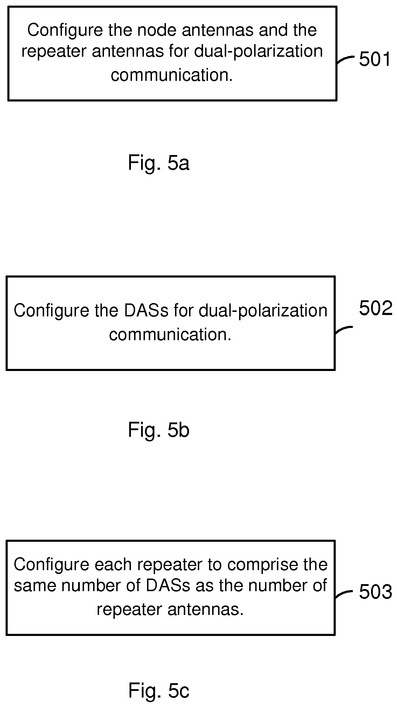

Figures 5a to 5c shows three flowcharts with three optional enhancements or variations to the main method described in the flowchart 400 in figure 4.

As described in the flowchart in figure 5a the method may optionally comprise the step of configuring 501 said node antennas and said repeater antennas for dual-polarization communication.

As described in the flowchart in figure 5b the method may optionally comprise the step of configuring 502 said DASs for dual-polarization communication. This optional step may preferably be implemented together with the optional step 501 discussed in figure 5a.

As described in the flowchart in figure 5c the method may optionally comprise the step of configuring 503 said each repeater to comprise the same number of DASs as the number of repeater antennas.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" "comprising," "includes" and/or "including" when used herein, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this invention belongs. It will be further understood that terms used herein should be interpreted as having a meaning that is consistent with their meaning in the context of this specification and the relevant art and will not be interpreted in an idealized or overly formal sense unless expressly so defined herein.

The foregoing has described the principles, preferred embodiments and modes of operation of the present invention. However, the invention should be regarded as illustrative rather than restrictive, and not as being limited to the particular embodiments discussed above. The different features of the various embodiments of the invention can be combined in other combinations than those explicitly described. It should therefore be appreciated that variations may be made in those embodiments by those skilled in the art without departing from the scope of the present invention as defined by the following claims.

## Claims

1. A wireless outdoor-indoor multiple-input multiple-output, MIMO, communication system (100) for communicating with user equipment (114) located inside a physical structure (105), comprising:
- a node (101) adapted for wireless MIMO communication, having at least two node antennas (102),
- at least two outdoor-indoor repeaters (107,108) having at least one repeater antenna (104,106) each, provided outside said physical structure (105), wherein each of said at least two outdoor-indoor repeaters is connected to at least one respective distributed antenna system, DASs, (109,110), provided inside said physical structure (110), wherein
- each of said at least two outdoor-indoor repeaters (107, 108) is connected to the same number of respective DASs as the number of repeater antennas, said repeaters (107,108) being adapted for line of sight, LOS, MIMO communication with said node (101) over a first radio channel (103), the repeaters (107, 108) being provided on the same physical structure (105) and spaced well-apart whereby the first radio channel (103) between the node (101) and the repeaters (107,108) support a rank that is equal to the number of repeater antennas (104,106),
- said respective DASs (109,110) are arranged to provide the same indoor coverage of the same interior space in said physical structure (105) from each repeater (107,108), and adapted for indoor MIMO communication over a second radio channel (113) with user equipment (114) located inside said physical structure (105), and
a diversity of the DASs (109,110) is configured whereby said second radio channel (113) between the repeaters (107,108) and user equipment (114) located inside said physical structure (105) support a rank that is equal to the number of repeater antennas (104,106).

2. The wireless communication system according to claim 1, wherein said first radio channel (103) and said second radio channel (113) are the same radio channel.

3. The wireless communication system according to any of the previous claims, wherein said node antennas (102) and said repeater antennas (104,106) are dual-polarized antennas.

4. The wireless communication system according to any of the previous claims, wherein said DASs (109,110) are dual-polarized DASs.

5. A method for providing wireless multiple-input multiple-output, MIMO, communication (400) between a node, located outside a physical structure, and user equipment, located inside said physical structure, the method comprising:
- configuring (401) said node for line of sight, LOS, wireless MIMO communication over a first radio channel with at least two outdoor-indoor repeaters provided outside said physical structure;
- configuring (402) at least one repeater antenna on each said outdoor-indoor repeater, located outside said physical structure, for outdoor LOS MIMO communication over said first radio channel with said node;
- configuring (503) each of said at least two outdoor-indoor repeaters to comprise the same number of DASs as the number of repeater antennas, wherein the DASs are located inside said physical structure,
- providing (404) said repeaters on the same physical structure and spaced well-apart whereby the first radio channel between the node and the repeaters support a rank that is equal to the number of repeater antennas,
- providing (405) said DASs, said DASs adapted for indoor MIMO communication over a second radio channel with user equipment located inside said physical structure, wherein the same indoor coverage of the same interior space in said physical structure is provided from each repeater, and said DASs configured with a diversity whereby said second radio channel between the repeaters and user equipment located inside said physical structure support a rank that is equal to the number of repeater antennas.

6. The method according to claim 5, further comprising configuring (501) said node antennas and said repeater antennas for dual-polarization communication.

7. The method according to claims 5 - 6, further comprising configuring (502) said DASs for dual-polarization communication.

## Patentansprüche

1. Drahtloses MIMO (Mehrfacheingang-Mehrfachausgang)-Kommunikationssystem (100) für den Innen- und Außenbereich zum Kommunizieren mit Benutzereinrichtungen (114), die innerhalb einer physischen Struktur (105) angeordnet sind, umfassend:
- einen Knoten (101), der für drahtlose MIMO-Kommunikation ausgelegt ist und mindestens zwei Knotenantennen (102) aufweist,
- mindestens zwei Innen- und Außenbereichs-Zwischenverstärker (107, 108) mit jeweils mindestens einer Zwischenverstärkerantenne (104, 106), die außerhalb der physischen Struktur (105) vorgesehen sind, wobei jeder der mindestens zwei Innen- und Außenbereichs-Zwischenverstärker mit mindestens einem jeweiligen verteilten Antennensystem, DASs, (109, 110), das innerhalb der physischen Struktur (110) vorgesehen ist, verbunden ist, wobei
- jeder der mindestens zwei Innen- und Außenbereichs-Zwischenverstärker (107, 108) mit der gleichen Anzahl von jeweiligen DASs wie der Anzahl von Zwischenverstärkerantennen verbunden ist, die Zwischenverstärker (107, 108) für Richtfunk, LOS, -MIMO-Kommunikation mit dem Knoten (101) über einen ersten Funkkanal (103) ausgelegt sind, die Zwischenverstärker (107, 108) auf der gleichen physischen Struktur (105) vorgesehen und gut beabstandet sind, wodurch der erste Funkkanal (103) zwischen dem Knoten (101) und den Zwischenverstärkern (107, 108) einen Rang unterstützt, welcher der Anzahl von Zwischenverstärkerantennen (104, 106) entspricht,
- die jeweiligen DASs (109, 110) so angeordnet sind, dass sie die gleiche Innenbereichsdeckung des gleichen Innenraums in der physischen Struktur (105) von jedem Zwischenverstärker (107, 108) bereitstellen, und für Innenbereichs-MIMO-Kommunikation über einen zweiten Kanal (113) mit Benutzereinrichtungen (114) ausgelegt sind, die innerhalb der physischen Struktur (105) angeordnet sind, und
eine Diversität der DASs (109, 110) konfiguriert ist, wodurch der zweite Funkkanal (113) zwischen den Zwischenverstärkern (107, 108) und den innerhalb der physischen Struktur (105) angeordneten Benutzereinrichtungen (114) einen Rang unterstützt, welcher der Anzahl von Zwischenverstärkerantennen (104, 106) entspricht.

2. Drahtloses Kommunikationssystem nach Anspruch 1, wobei der erste Funkkanal (103) und der zweite Funkkanal (113) der gleiche Funkkanal sind.

3. Drahtloses Kommunikationssystem nach einem der vorhergehenden Ansprüche, wobei die Knotenantennen (102) und die Zwischenverstärkerantennen (104, 106) doppelpolarisierte Antennen sind.

4. Drahtloses Kommunikationssystem nach einem der vorhergehenden Ansprüche, wobei die DASs (109, 110) doppelpolarisierte DASs sind.

5. Verfahren zur Bereitstellung von drahtloser MIMO (Mehrfacheingang-Mehrfachausgang)-Kommunikationen (400) zwischen einem Knoten, der außerhalb einer physischen Struktur angeordnet ist, und Benutzereinrichtungen, die innerhalb der physischen Struktur angeordnet sind, wobei das Verfahren umfasst:
- Konfigurieren (401) des Knotens für Richtfunk, LOS, -MIMO-Kommunikation über einen ersten Funkkanal mit mindestens zwei Innen- und Außenbereichs-Zwischenverstärkern, die außerhalb der physischen Struktur vorgesehen sind;
- Konfigurieren (402) mindestens einer Zwischenverstärkerantenne auf jedem der Innen- und Außenbereichs-Zwischenverstärker, die außerhalb der physischen Struktur angeordnet ist, für Außenbereichs-LOS-MIMO-Kommunikation über den ersten Funkkanal mit dem Knoten;
- derartiges Konfigurieren (503) eines jeden der mindestens zwei Innen- und Außenbereichs-Zwischenverstärker, dass sie die gleiche Anzahl von DASs wie die Anzahl von Zwischenverstärkerantennen aufweisen, wobei die DASs innerhalb der physischen Struktur angeordnet sind,
- Vorsehen (404) der Zwischenverstärker auf der gleichen physischen Struktur und gut beabstandet, wodurch der erste Funkkanal zwischen dem Knoten und den Zwischenverstärkern einen Rang unterstützt, welcher der Anzahl von Zwischenverstärkerantennen entspricht,
- Vorsehen (405) der DASs, wobei die DASs für Innenbereichs-MIMO-Kommunikation über einen zweiten Funkkanal mit Benutzereinrichtungen ausgelegt sind, die innerhalb der physischen Struktur angeordnet sind, wobei die gleiche Innenbereichsdeckung des gleichen Innenraums in der physischen Struktur von jedem Zwischenverstärker bereitgestellt wird, und die DASs mit einer Diversität konfiguriert sind, wodurch der zweite Funkkanal zwischen den Zwischenverstärkern und den Benutzereinrichtungen, die innerhalb der physischen Struktur angeordnet sind, einen Rang unterstützt, welcher der Anzahl von Zwischenverstärkerantennen entspricht.

6. Verfahren nach Anspruch 5, ferner umfassend ein Konfigurieren (501) der Knotenantennen und der Zwischenverstärkerantennen für Doppelpolarisationskommunikation.

7. Verfahren nach einem der Ansprüche 5 bis 6, ferner umfassend ein Konfigurieren (502) der DASs für Doppelpolarisationskommunikation.

## Revendications

1. Système de communication sans fil extérieur-intérieur à entrées multiples et sorties multiples, MIMO, (100) pour communiquer avec un équipement d'utilisateur (114) situé à l'intérieur d'une structure physique (105), comprenant :
- un noeud (101) apte à effectuer une communication MIMO sans fil, comportant au moins deux antennes de noeud (102),
- au moins deux répéteurs extérieurs-intérieurs (107, 108), chacun d'eux comportant au moins une antenne de répéteur (104, 106), prévus à l'extérieur de ladite structure physique (105), dans lequel chacun desdits au moins deux répéteurs extérieurs-intérieurs est relié à au moins un système d'antenne distribué, DAS, (109, 110) respectif, prévu à l'intérieur de ladite structure physique (110), dans lequel
- chacun desdits au moins deux répéteurs extérieurs-intérieurs (107, 108) est relié au même nombre de DAS respectifs que le nombre d'antennes de répéteur, lesdits répéteurs (107, 108) étant aptes à effectuer une communication en ligne de mire, LOS, MIMO avec ledit noeud (101) sur un premier canal radio (103), les répéteurs (107, 108) étant prévus sur la même structure physique (105) et largement espacés de telle manière que le premier canal radio (103) entre le noeud (101) et les répéteurs (107, 108) prenne en charge un rang qui est égal au nombre d'antennes de répéteur (104, 106),
- lesdits DAS respectifs (109, 110) sont agencés pour assurer la même couverture intérieure du même espace intérieur dans ladite structure physique (105) à partir de chaque répéteur (107, 108), et aptes à effectuer une communication MIMO intérieure sur un deuxième canal radio (113) avec un équipement d'utilisateur (114) situé à l'intérieur de ladite structure physique (105), et
une diversité de DAS (109, 110) est configurée de telle manière que ledit deuxième canal radio (113) entre les répéteurs (107, 108) et l'équipement d'utilisateur (114) situé à l'intérieur de ladite structure physique (105) prenne en charge un rang qui est égal au nombre d'antennes de répéteur (104, 106).

2. Système de communication sans fil selon la revendication 1, dans lequel ledit premier canal radio (103) et ledit deuxième canal radio (113) sont le même canal radio.

3. Système de communication sans fil selon l'une quelconque des revendications précédentes, dans lequel lesdites antennes de noeud (102) et lesdites antennes de répéteur (104, 106) sont des antennes à double polarisation.

4. Système de communication sans fil selon l'une quelconque des revendications précédentes, dans lequel lesdits DAS (109, 110) sont des DAS à double polarisation.

5. Procédé de fourniture d'une communication sans fil à entrées multiples et sorties multiples, MIMO, (400) entre un noeud situé à l'extérieur d'une structure physique et un équipement d'utilisateur situé à l'intérieur de ladite structure physique, le procédé comprenant :
- la configuration (401) dudit noeud pour une communication en ligne de mire, LOS, MIMO sans fil sur un premier canal radio avec au moins deux répéteurs extérieurs-intérieurs prévus à l'extérieur de ladite structure physique ;
- la configuration (402) d'au moins une antenne de répéteur sur chaque dit répéteur extérieur-intérieur situé à l'extérieur de ladite structure physique, pour une communication LOS MIMO extérieure sur ledit premier canal radio avec ledit noeud ;
- la configuration (503) de chacun desdits au moins deux répéteurs extérieurs-intérieurs pour comprendre le même nombre de DAS que le nombre d'antennes de répéteur, dans lequel les DAS sont situés à l'intérieur de ladite structure physique,
- la fourniture (404) desdits répéteurs sur la même structure physique et largement espacés de telle manière que le premier canal radio entre le noeud et les répéteurs prenne en charge un rang qui est égal au nombre d'antennes de répéteur,
- la fourniture (405) desdits DAS, lesdits DAS étant aptes à effectuer une communication MIMO intérieure sur un deuxième canal radio avec un équipement d'utilisateur situé à l'intérieur de ladite structure physique, dans lequel la même couverture intérieure du même espace intérieur dans ladite structure physique est assurée à partir de chaque répéteur, et lesdits DAS configurés avec une diversité de telle manière que ledit deuxième canal radio entre les répéteurs et l'équipement d'utilisateur situé à l'intérieur de ladite structure physique prenne en charge un rang qui est égal au nombre d'antennes de répéteur.

6. Procédé selon la revendication 5, comprenant en outre la configuration (501) desdites antennes de noeud et desdites antennes de répéteur pour une communication à double polarisation.

7. Procédé selon les revendications 5 et 6, comprenant en outre la configuration (502) desdits DAS pour une communication à double polarisation.
